# EUROPÄISCHE PATENTSCHRIFT

(11) **EP 1 715 402 B1**
(45) Veröffentlichungstag und Bekanntmachung des Hinweises auf die Patenterteilung: **26.03.2008**
(21) Anmeldenummer: 05008465.6
(22) Anmeldetag: 19.04.2005
(51) Int. Cl.: G06F 1/00, H04L 12/28

(54) **Verfahren zur Breitbanddatenübertragung**
Broadband data transmission method
Procédé de transmission de données à large bande

(43) Veröffentlichungstag der Anmeldung: 25.10.2006
(73) Patentinhaber: Anoop Nahar, 40885 Ratingen (DE)
(72) Erfinder: Anoop Nahar, 40885 Ratingen (DE)
(74) Vertreter: Stenger, Watzke & Ring

(56) Entgegenhaltungen:
- EP-A- 1 030 272
- EP-A- 1 284 575
- EP-A- 1 499 127
- WO-A-02/084456
- WO-A-03/056830

## Beschreibung

Die vorliegende Erfindung bezieht sich auf ein Verfahren zur Datenübertragung über zumindest einen Breitbandkanal.

Eine derartige Breitbanddatenübertragung kann beispielsweise mittels eines privaten Intemetzuganges über einen Homecomputer erfolgen. Ein wesentlicher Vorteil bei der Verwendung eines Homecomputers besteht darin, daß dieser durch seinen Benutzer beliebig konfigurierbar ist und mit der erforderlichen Software versehen werden kann, wodurch eine auf den Benutzer spezifizierte Systemeinstellung erfolgt. Entsprechend können verschiedenste Anwendungen implementiert werden. Ein weiterer Vorteil von Homecomputern besteht darin, daß der Endnutzer beispielsweise über den privaten Internetzugang identifizierbar und authentifizierbar ist. Auf diese Weise kann der Endnutzer im Internet beispielsweise auch kostenpflichtige Seiten oder Anwendungen aufrufen, die dann über die private Telefonrechnung abrechenbar sind. Die mangelnde Mobilität von Homecomputern ist hingegen ein großer Nachteil.

Abhilfe schaffen diesbezüglich diverse mobile Endgeräte- Laptops sind beispielsweise ähnlich anwenderfreundlich wie Homecomputer, da sie große Displays, Tastaturen, normalerweise ausreichend Speicherplatz und die erforderliche Bandbreite aufweisen. Allerdings sind Laptops recht groß und schwer, weshalb Endnutzer häufig davon absehen, diese stets mit sich zu führen.

In Bezug auf die Gerätegröße und das Gerätegewicht sind wiederum sogenannte Handhelds vorteilhaft, die sehr klein, leicht und handlich sind, so daß der Endnutzer sie bequem mitführen kann. Allerdings haben Handhelds entsprechend kleine Displays, unpraktische Tastaturen, meist einen recht geringen Speicherplatz und dergleichen. Ferner ermöglichen sie mobil lediglich eine Datenübertragung über einen Mobilfunkkanal eines Mobilfunknetzes, weshalb die Datenübertragung insbesondere großer Datenmengen viel Zeit in Anspruch nimmt.

Um sowohl die gewünschte Mobilität als auch die gewünschte Anwenderfreundlichkeit zu gewährleisten, werden immer mehr öffentlich zugängliche Breitbandterminals mit Internetzugang bereitgestellt, die einen Webbrowser aufweisen, der über eine IP-Adresse identifizierbar und adressierbar ist. Über derartige Breitbandterminals können große Datenmenge in kurzen Zeiträumen übermittelt werden. Ein großer Nachteil solcher öffentlich zugänglicher Breitbandterminals besteht allerdings darin, daß diese vom Endnutzer nicht oder nur begrenzt mittels geeigneter Software oder Konfiguration voreingestellt werden können. Daher lassen sich viele und insbesondere spezielle Datenformate von öffentlichen Breitbandterminals aus häufig nicht öffnen. Ein weiterer Nachteil besteht darin, daß ein Endnutzer, der ein solches Breitbandterminal benutzt, nicht identifizierbar oder authentifizierbar ist, so daß beispielsweise kostenpflichtige Seiten oder Anwendungen nicht abrufbar sind.

Die EP 1 499 127 A1 ist auf ein Verfahren zur Verteilung von Echtzeitdatenströmen in einem Multimedianetzwerk gerichtet. Dabei ist vorgesehen, einen ausgewählten Datenstrom mit Hilfe einer Vermittlungseinrichtung an ein Empfangsgerät zu leiten, wobei eine Auswahl des Datenstroms mit Hilfe eines Mobiltelefons erfolgen kann.

Die WO 02/084456 A2 ist auf eine Benutzeridentifikation zur Freigabe eines mit einem Server verbundenen Benutzerendgeräts gerichtet. Zur Durchführung der Benutzeridentifikation ist vorgesehen, dass ein Benutzer dem Benutzerendgerät ein Benutzerdatenprofil in Form eines Tokens zur Verfügung stellt. Das gegebenenfalls durch ein Benutzerpasswort ergänzte Benutzerdatenprofil wird an den Server weitergeleitet, der die vom Benutzer gewünschten Informationen enthält. Der Server vergleicht das bereitgestellte Benutzerdatenprofil mit einem gespeicherten Benutzerdatenprofil und verschickt bei Übereinstimmung ein weiteres Datenprofil über ein Mobilfunknetzwerk. Der Benutzer gibt das über das Mobilfunknetzwerk erhaltene Benutzerprofil in das Benutzerendgerät ein und erhält somit Zugang auf den Server.

Die WO 03/056830 ist auf ein Bezahlungssystem für den Empfang von Fernsehprogrammen gerichtet. Dabei ist vorgesehen, mittels eines Mobiltelefons eine Kennung einer als Set-Top-Box ausgeführten Dekodiereinrichtung und eine eigene Kennung an einen Server zu senden. Der Server überprüft, ob der Benutzer berechtigt ist, die Dekodiereinrichtung zu benutzen und sendet bei positivem Überprüfungsergebnis einen Kontrollcode an das Mobiltelefon des Benutzers, um zu dokumentieren, dass das gewünschte Fernsehprogramm empfangen werden kann.

Die EP 0 977 397 A2 beschreibt ein Verfahren zur Übertragung von sensiblen Informationen über eine unsichere Kommunikationsverbindung. Dabei ist vorgesehen, zwischen einer ersten Partei und einer zweiten Partei einen öffentlichen Schlüssel zu übertragen und eine Verschlüsselung einer Zufallszahl anhand des öffentlichen Schlüssels vorzunehmen. Die verschlüsselte Zufallszahl wird über einen unsicheren Datenübertragungskanal an die zweite Partei übertragen und wird dort entschlüsselt. Anschließend werden über einen sicheren Kanal von der ersten Partei Autorisierungsinformationen unter Zuhilfenahme der ersten Zufallszahl an die zweite Partei übertragen. Anschließend werden über einen sicheren Kanal sensible Daten von der zweiten Partei an die erste Partei übertragen, sofern die zweite Partei die Autorisierungsdaten akzeptiert hat.

Es ist daher eine **Aufgabe** der vorliegenden Erfindung, ein Verfahren zur Datenübertragung über zumindest einen Breitbandkanal zu schaffen, das die gewünschte Mobilität und Anwenderfreundlichkeit gewährleistet und zudem eine Identifizierung und Authentifizierung des Endnutzers ermöglicht.

Diese Aufgabe wird gemäß der vorliegenden Erfindung durch ein Verfahren zur Datenübertragung von einem anbieterseitigen Server an ein anonymes Breitbandterminal über zumindest einen Breitbandkanal gelöst, bei dem Steuerbefehle für die Breitbanddatenübertragung über zumindest einen Kanal eines Mobilfunknetzes ausführbar sind, wobei für die Ausführung der Steuerbefehle zumindest ein Mobilfunkendgerät verwendet wird und wobei für die Steuerbefehle zwischen dem Mobilfunkendgerät und dem anbieterseitigen Server ein abgesichertes Protokoll eingesetzt wird, indem eine Authentifizierung der Datenübertragung über eine manuelle Bestätigung einer Übereinstimmung eines an das Breitbandterminal und an das Mobilfunkendgerät übertragenen Tokens vorgenommen wird.

Durch die parallele Verwendung eines Breitbandkanals und eines Mobilfunkkanals können die Vorteile der jeweiligen Verfahren kombiniert werden. Über den Breitbandkanal können in kurzer Zeit große Datenmengen gehandhabt werden.

Steuerbefehle, bei denen nur geringe Datenmengen versendet werden müssen, werden hingegen über einen Mobilfunkkanal gesendet. Die Verwendung des Mobilfunkkanals gestattet die Identifizierung und Authentifizierung des Endnutzers, beispielsweise über die MSISDN des mobilen Endgerätes des Endnutzers. Entsprechend besteht grundsätzlich die Möglichkeit, dem Endnutzer die Nutzung kostenpflichtiger Anwendungen in Rechnung zu stellen.

Eine Grundidee des erfindungsgemäßen Verfahrens besteht darin, sowohl über den Breitbandkanal als auch über den Mobilfunkkanal eine Verbindung für die Datenübertragung in Form einer Sitzung oder einer sogenannten Session aufzubauen, wobei sitzungsbezogene Kontrollfunktionen, wie beispielsweise Authentifizierung, Zugangskontrolle, Auswahl von zu übertragenden Daten oder dergleichen streng von den zugehörigen anwendungsbezogenen Inhalten, zum Beispiel Bilder, Filme, Musik, Email, Anhänge etc., getrennt werden. Während die Kontrollfunktionen mit ihren relativ geringen Anforderungen an Bandbreite, Displaygrößen und Tastaturen ausschließlich über den Mobilfunkkanalbereich gestellt werden, läuft die Übertragung der eigentlichen Daten mit ihren hohen Ansprüchen an Geschwindigkeit, Displays oder dergleichen über die breitbandigen Zugangskanäle.

Auf diese Weise werden die Vorteile von persönlichen Mobilfunkdatendiensten und anonymen Breitbanddatenzugängen kombiniert, wodurch dem Endnutzer beispielsweise ein optimierter Zugriff auf seine persönlichen Daten ermöglicht werden kann. Existierende Internetanwendungen können dieselbe Sicherheit und Personalisierung wie mobile Anwendungen erhalten. Die bekannten Vorteile wie Identität, Authentifizierung und Kontrolle für mobile Anwendungen werden auch im Breitbandbereich verfügbar gemacht.

Bevorzugt wird für die Breitbanddatenübertragung wenigstens ein Breitbandterminal verwendet. Für die Ausführung der Steuerbefehle dient zumindest ein Mobilfunkendgerät, wie beispielsweise ein Mobiltelefon. Auf diese Weise läßt sich eine sichere Anzeige und Nutzung von vertraulichen und persönlichen oder geschützten Anwendungen oder Inhalten über anonyme Breitbandkanäle mittels Sitzungskontrolle und Inhaltssteuerung durch ein mobiles Endgerät realisieren, wobei das Mobiltelefon quasi als Fernsteuerung zur Kontrolle von Breitbandzugängen dient.

Bevorzugt erfolgt bei dem erfindungsgemäßen Verfahren zur Identifizierung des Endnutzers eine Grundregistrierung und/oder jeweils vor Beginn der eigentlichen Breitbanddatenübertragung eine Identifizierung des Endnutzers über den zumindest einen Mobilfunkkanal, der zur Übermittlung der Steuerbefehle verwendet wird. Die einfachste Möglichkeit besteht darin, die bereits erfolgte Authentifizierung des Mobiltelefons im Netz des Mobilfunkbetreibers nutzbar zu machen. Zusätzlich zur IP-Adresse, die dem Mobiltelefon und damit dem Endnutzer zeitweilig aber eindeutig zugeordnet ist, kann der Mobilfunkbetreiber die Identität in Form einer Zuordnung zur MSISDN des Endnutzers sicher feststellen. Weiterhin ist der Zugriff auf die SIM-Karte mittels API (Application Programming Interface) aus der Anwendungssoftware möglich und kann zur Identifizierung benutzt werden. Schließlich lassen sich im Rahmen eines speziellen Provisionierungsprozesses sichere Schlüssel für ein Public Key Infrastructure Verfahren, kurz PKI-Verfahren, auf dem Mobiltelefon hinterlegen und für die Authentifizierung des Endnutzers verwenden. Eine einfache WAP (Wireless Application Protocol)-basierte Implementierung des Endnutzers mit einer Authentifizierung über einen Benutzernamen und ein Passwort ist ebenso einfach machbar, ist aber wegen der geringen Sicherheit nicht von Vorteil.

Dabei vor dem Beginn der eigentlichen Breitbanddatenübertragung endnutzerseitig über den zumindest einen Mobilfunkkanal eine endnutzerseitige Zustimmung, daß eine Breitbanddatenübertragung stattfinden soll. Auf diese Weise wird die Sicherheit des erfindungsgemäßen Verfahrens erhöht.

Ferner sind die mittels der Breitbanddatenübertragung zu übertragenden Daten bevorzugt endnutzerseitig über den zumindest einen Kanal eines Mobilfunknetzes auswählbar, so daß die gesamte Steuerung der Breitbanddatenübertragung der Kontrolle des Endnutzers untersteht.

Weiterhin ist es gemäß der vorliegenden Erfindung vorteilhaft, daß mittels der Breitbanddatenübertragung Daten an mehrere Teilnehmer übertragbar sind, also gleichzeitig mehrere Breitbandterminals verwendet werden. Vorteilhaft sind die Breitbandterminals, die an der Breitbanddatenübertragung teilnehmen, endnutzerseitig über den zumindest einen Kanal eines Mobilfunknetzes auswählbar, so daß der Endnutzer auch in dieser Hinsicht die Kontrolle über das Verfahren hat.

Das Verfahren gemäß der vorliegenden Erfindung weist bevorzugt folgende Schritte auf:
- Grundregistrierung eines Endnutzers bei einem Anbieter des erfindungsgemäßen Verfahrens, so daß der Endnutzer durch den Anbieter eindeutig identifizierbar ist;
- Verbindungsaufbau einer Breitbandverbindung zwischen einem ersten Breitbandterminal und einem anbieterseitigen Server, wobei eine Identifizierung des Endnutzers erfolgt;
- Verbindungsaufbau einer Mobilfunkverbindung zwischen dem anbieterseitigen Server und einem Mobilfunkendgerät des identifizierten Endnutzers;
- endnutzerseitige Bestätigung über die Mobilfunkverbindung, daß eine Breitbanddatenübertragung stattfinden soll und
- Beginn der Datenübertragung bei positiver Bestätigung.

Bevorzugt erzeugt der anbieterseitige Server bei positiver Bestätigung automatisch über einen Router eine Breitbandverbindung zwischen dem ersten Breitbandterminal und einem weiteren Breitbandterminal, von dem aus Daten an das erste Breitbandterminal übertragen werden sollen.

Nachfolgend wird unter Bezugnahme auf die Zeichnungen eine Ausführungsform des erfindungsgemäßen Verfahrens genauer beschrieben.

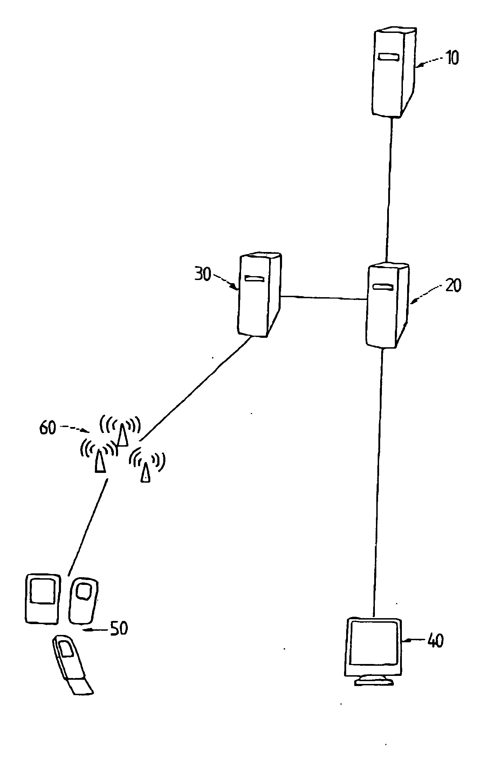

Die Zeichnung ist eine Prinzipskizze und zeigt verschiedene Einrichtungen, die bei dieser Ausführungsform des erfindungsgemäßen Verfahrens eingesetzt werden, nämlich einen Server 10, einen Router 20, einen Steuerserver 30, ein anonymes Breitbandterminal 40, mobile Endgeräte 50 eines Endnutzers sowie ein Mobilfunknetz 60.

Auf dem Server 10 sind diejenigen Daten gespeichert, die mit Hilfe des erfindungsgemäßen Verfahrens an ein Breitbandterminal übertragen werden sollen. Vor der Datenübertragung sind die zu sendenden Daten aufzubereiten. Die Aufbereitung ist applikationsspezfisch und kann auch von anderen Parametern wie der verfügbaren Bandbreite, beispielsweise bei der Übertragung von Videostream-Daten, oder den technischen Daten des Breitbandterminals, wie zum Beispiel Auflösung oder dergleichen, abhängen. Die zur Aufbereitung verwendeten Technologien und Verfahren werden als verfügbar vorausgesetzt und sollen hier nicht im Einzelnen beschrieben werden. Im Falle einer Vielzahl von verschiedenen Daten, die mittels des erfindungsgemäßen Verfahrens übertragen werden sollen, ist es von Vorteil, wenn diese Daten dem Endnutzer katalogisiert oder derart aufbereitet zur Verfügung gestellt werden, daß der Endnutzer über ein mobiles Endgerät 50 eine konkrete Auswahl derjenigen Daten treffen kann, die zu übertragen sind.

Bei dem Router 20 handelt es sich um die intelligente Schaltzentrale des erfindungsgemäßen Verfahrens. Der Router 20 ist zwischen dem anonymen Breitbandterminal 40 und dem Server 10 angeordnet. Er fungiert als Proxiserver und gibt den Zugang zu den angeforderten Daten nur dann frei, wenn für das anonyme Breitbandterminal 40 zuvor eine entsprechende Sitzung auf dem Steuerserver 30 authentifiziert wurde, was nachfolgend noch genauer beschrieben ist. Der Router 20 leitet die zu übertragenden Daten vom Server 10 lediglich zum anonymen Breitbandterminal 40, ohne diese in irgendeiner Weise weiterzuverarbeiten. Zu diesem Zweck muß gegebenenfalls eine sichere Verbindung zwischen dem anonymen Breitbandterminal 40 und dem Server 10 auf- und auch wieder abgebaut werden, wobei der Router 20 dann nur auf der Übertragungsebene routet.

Die Anbindung des Routers 20 an die anderen Komponenten kann je nach Anwendung unterschiedlich ausfallen. Die Verbindung zwischen dem Router 20 und dem Server 10 sollte sicher und breitbandig sein. Im wahrscheinlichsten Fall wird es bei der Anbindung an Drittserver zu VPN-geschützten Internetanbindungen kommen. VPN steht für "Virtual Private Network". Mit VPN läßt sich über ein offenes, ungeschütztes Netz, wie beispielsweise das Internet, ein sicheres Teilnetz aufbauen, in dem die Kommunikation gegen Abhören und Zugriffe durch fremde Teilnehmer abgeschottet ist. Erreicht wird dies durch sogenanntes "Tunneling" des Datenverkehrs über einen VPN-Server, an dem die Verbindungen beim Aufbau authentisiert werden müssen, sowie durch die gleichzeitige Verschlüsselung der Daten. Auch dedizierte Standleitungen sind bei höchsten Sicherheitsanforderungen denkbar. Bei eine Implementierung zusammen mit dem Server 10 kann dies auch einfach ein Local Area Network oder kurz LAN sein oder im allereinfachsten Fall auch auf demselben Rechner installiert werden.

Der Steuerserver 30 hält die Datenkommunikationsverbindung mit dem Endnutzer auf dem mobilen Endgerät 50. Für die Sitzungskontrolle und die Steuerung der zu übertragenden Daten sind zwei verschiedene Kommunikationen mit dem Endgerät 50 vorgesehen.

Bei der Sitzungskontrolle verwaltet der Steuerserver alle Zugriffe und Sitzungen bei der Durchführung des erfindungsgemäßen Verfahrens. Dazu generiert der Steuerserver 30 bei jeder initiierenden Zugriffsanforderung ein eindeutiges, zur Session gehörendes Token, das sowohl dem anonymen Breitbandterminal 40 als auch dem mobilen Endgerät 50 zur Verfügung gestellt wird. Die Sitzung gilt als authentifiziert, wenn die Übereinstimmung beider Token auf dem mobilen Endgerät 50 manuell bestätigt wurde. Ist dies der Fall, wird der Router 20 angewiesen, den Zugang auf die gewünschten Daten für den speziellen anonymen Breitbandterminal 40 und für die Dauer der Sitzung freizugeben. Der Steuerrechner 30 ist in der Lage, mehrere Sitzungen über ein und dasselbe mobile Endgerät gleichzeitig zu verwalten.

Der Steuerserver 30 verfügt über alle Sitzungsinformationen, wie beispielsweise Start, Ende, Adresse des anfordernden anonymen Breitbandterminals, angeforderte Daten, Authentifizierung durch das mobile Endgerät, etc. und ist demzufolge in der Lage, die wichtigsten abrechnungsrelevanten Informationen zu liefern.

Neben der Sitzungskontrolle ist der Steuerserver 30 in der Lage, Steuerbefehle für die zu übertragenden Daten entgegenzunehmen. Die Steuerbefehle können vorzugsweise aus einem Menü ausgewählt werden, wie beispielsweise die Daten, die übermittelt werden sollen, die Reihenfolge der zu übermittelnden Daten oder dergleichen. Steuerungsbefehle für die zu übertragenden Daten werden allerdings vom Steuerserver 30 nicht selbst bearbeitet sondern gegebenenfalls über den Router 20 an den Server 10 weitergeleitet und dort bearbeitet. Da Steuerungsbefehle in bezug auf die zu übertragenden Daten sehr anwendungsspezifisch sind, soll und kann auf die Funktionsweise hier nicht im Detail weiter eingegangen werden. Allgemein ist zu sagen, daß über den Steuerserver 30 ein eigener logischer Kanal zur Steuerung der zu übertragenden Daten zwischen dem mobilen Endgerät 50 und dem Server 10 aufgebaut wird, über den ein proprietäres Protokoll anwendungsspezifisch zu implementieren ist.

Das anonyme Breitbandterminal 40 ist technisch sowie anwendungsspezifisch relativ beliebig gestaltbar. Eine Grundvoraussetzung besteht allerdings darin, daß das anonyme Breitbandterminal 40 eindeutig adressierbar bzw. identifizierbar ist, so daß Daten gezielt verfügbar gemacht werden können. Der Begriff "anonym" bedeutet vorliegend, daß das Breitbandterminal 40 nur begrenzt durch Software oder Konfiguration voreingestellt ist. Bei einem anonymen Breitbandterminal 40 kann es sich beispielsweise um einen öffentlichen Internetzugang mit einem Webbrowser handeln, der Ober eine IP-Adresse identifizierbar und adressierbar ist. Weitere Anwendungsbereiche können Faxgeräte sein, gegebenenfalls DVB (Digital Video Broadcast)-Empfänger oder Videostreaming-Server, die mittels dem erfindungsgemäßen Verfahren identifiziert und über ein mobiles Endgerät 50 sicher adressierbar gemacht werden können.

Für die aktive Steuerung und Kontrolle von Breitbandsitzungen über ein mobiles Endgerät 50 ist bei dem erfindungsgemäßen Verfahren die Implementierung einer Anwendungssoftware auf dem mobilen Endgerät 50 vorgesehen. Diese Anwendungssoftware stellt das primäre User-Interface für den Endnutzer dar. Die Anwendungssoftware informiert den Endnutzer über anliegende Sitzungsanfragen, die über Breitbandkanäle an den Steuerserver 30 übermittelt werden. Mit Hilfe des mobilen Endgerätes können solche Anfragen abgelehnt oder bewilligt werden. Dabei identifiziert sich jede Anfrage über ein Token, das vom Steuerserver 30 generiert wurde. Der Endnutzer kann nach Vergleich des Tokens mit dem anonymen Breitbandterminal 40 die Sitzung auf dem mobilen Endgerät 50 bestätigen oder ablehnen. Mit Hilfe des mobilen Endgerätes können mehrere Sitzungsanfragen individuell und parallel behandelt werden. Dadurch läßt sich beispielsweise die Möglichkeit eines Webcastings für geschlossene Benutzergruppen in einfacher Art und Weise realisieren. Das mobile Endgerät 40 hält über das Mobilfunknetz eine paketvermittelte Datenverbindung zum Steuerserver 30, wie beispielsweise GPRS, UMTS oder dergleichen. Es ist wichtig, daß diese Verbindung sicher authentifiziert ist. Hierzu kommen mehrere Verfahren in Betracht. Die einfachste Möglichkeit besteht darin, die bereits erfolgte Authentifizierung des Mobilfunktelefons im Netz des Mobilfunkbetreibers nutzbar zu machen. Zusätzlich zur IP-Adresse, die dem mobilen Endgerät und damit dem Endnutzer zeitweilig aber eindeutig zugeordnet ist, kann der Mobilfunkbetreiber die Identität in Form einer Zuordnung zur MSISDN des Teilnehmers sicher feststellen. Weitere Verfahren sind ebenso denkbar und implementierbar. Beispielsweise ist der Zugriff auf die SIM-Karte mittels API aus der Anwendungssoftware möglich und kann zur Identifizierung benutzt werden. Auch lassen sich im Rahmen eines speziellen Provisionierungsprozesses sichere Schlüssel für ein PKI-Verfahren auf dem mobilen Endgerät hinterlegen und für die Authentifizierung des Endnutzers verwenden. Eine einfache WAP-basierte Implementierung des mobilen Endgerätes 50 mit Authentifizierung gegenüber dem Steuerserver 30 mit Hilfe eines Benutzemamens und eines Passwortes ist ebenso einfach realisierbar, ist aber wegen der geringen Sicherheit nicht zu bevorzugen.

Nachfolgend wird ein Anwendungsbeispiel der soeben behandelten Ausführungsform des erfindungsgemäßen Verfahrens beschrieben, bei dem ein Endnutzer von einem öffentlich zugänglichen anonymen Breitbandterminal 40 Email-Anhänge abrufen will, die auf seinem privaten Server 10 hinterlegt sind. Der Endnutzer ist beim Betreiber des erfindungsgemäßen Verfahrens, bei dem auch der Steuerserver 30 positioniert ist, grundregistriert und durch diesen eindeutig identifizierbar. Ihm wird eine persönliche Internetseite zur Verfügung gestellt, die beispielsweise der SIM-Karte seines Mobiltelefons zugeordnet ist.

Zum Abrufen seiner Email-Anhänge sucht nun der Endnutzer ein öffentlich zugängliches anonymes Breitbandterminal 40 auf und öffnet über dieses seine persönliche Internetseite. Durch das Öffnen der Internetseite wird eine Sitzungsanforderung generiert und an den Steuerserver 30 geleitet. Dieser erzeugt ein eindeutiges Token für die angefragte Sitzung. Der Steuerserver 30 stellt dabei sicher, daß dieses Token nicht für eine andere, parallele Sitzung des gleichen Endnutzers bereits verwendet wird. Das Token besteht beispielsweise aus einer Kombination aus der IP-Adresse des Anfragenden anonymen Breitbandterminals 40 und einem Zeitstempel, könnte aber auch ein viel einfacheres, beliebiges Zeichen sein. Der Steuerserver 30 generiert daraufhin eine kleine html-Seite und sendet diese zurück an das anonyme Breitbandterminal 40. Diese html-Seite stellt das Token sichtbar für den Endnutzer auf dem anonymen Breitbandterminal 40 dar. Die html-Seite enthält zusätzlich einen Mechanismus, mit dem die Seite, die auf dem anonymen Breitbandterminal 40 angezeigt wird, durch den Steuerserver 30 geändert bzw. aktualisiert werden kann. Dies kann beispielsweise ein kleines Java-Skript sein, sekündlich nach Änderungen des Inhalts abfragt, sogenanntes Polling.

Ferner leitet der Steuerserver 30 die Sitzungsanfrage zusammen mit dem zugehörigen Token über einen mobilen Datenkanal eines Mobilfunknetzes 60 an das Mobiltelefon 50 des Endnutzers weiter. Der Endnutzer kann daraufhin das auf dem Mobiltelefon 50 angezeigte Token mit dem auf dem anonymen Breitbandterminal 40 angezeigten Token vergleichen. Stimmen die Token überein, akzeptiert der Endnutzer die Sitzung, indem er die Sitzungsanfrage über das Mobiltelefon 50 quittiert. Diese Quittierung wird wiederum über einen mobilen Datenkanal des Mobilfunknetzes 60 an den Steuerserver 30 übertragen. Die Sitzung ist nun im Steuerserver 30 identifiziert. Entsprechend leitet der Steuerserver 30 die über das Mobiltelefon 50 getätigte Anfrage mit Hilfe des Routers 20 auf den persönlichen Server 10 des Endnutzers um. Zwischen dem persönlichen Server 10 und dem Router 20 besteht eine sichere Verbindung, die beispielsweise durch einen VPN-Tunnel über einen breitbandigen Internetzugang gestützt ist. Das Protokoll zwischen dem Mobiltelefon 50 und dem persönlichen Server 10 ist abgesichert, beispielsweise über https, so daß weder der Steuerserver 30 noch der Router 20 über die übertragenden Inhalte Kenntnis erlangen können.

Die Auswahl und Steuerung der vom persönlichen Server 10 an das öffentlich zugängliche anonyme Breitbandterminal 40 zu übertragenden Daten kann sowohl über das Mobiltelefon 50 als auch interaktiv über das anonyme Breitbandterminal 40 erfolgen. Aus verschiedenen Gründen ist gegebenenfalls ein geeigneter Mix aus beidem zu bevorzugen. Nachfolgend wird davon ausgegangen, daß im vorliegenden Beispiel die Steuerung allein über das Mobiltelefon 50 erfolgt.

Das Mobiltelefon 50 steht über einen Mobilfunkkanal in ständiger Verbindung mit dem persönlichen Server 10. Diese Verbindung wird über den Steuerserver 30, den Router 20 und von dort Ober den VPN-Tunnel zum persönlichen Server 10 geleitet. Der persönliche Server 10 liefert über diese Verbindung eine Auswahl der eingegangenen Emails mit den zugehörigen Anhängen. Dabei werden beispielsweise nur die Dateinamen der Anhänge nicht aber die Anhänge selbst übertragen. Auf diese Weise wird die Verbindung über den Mobilfunkkanal nicht durch zu hohe Übertragungsmengen überlastet. Das Verfahren benötigt auch keinen Speicherplatz für die Anhänge auf dem Mobiltelefon. Mit Hilfe des Mobiltelefons 50 wählt nun der Endnutzer einen Anhang aus, der auf dem anonymen Breitbandterminal 40 angezeigt werden soll. Diese Auswahl wird dem persönlichen Server 10 wiederum über den Mobilfunkkanal zugeleitet. Der im html-Format dargestellte Anhang wird dem anonymen Breitbandterminal 40 zur Verfügung gestellt und dort großformatig zur Anzeige gebracht. Die den Email-Anhang enthaltenden Daten werden dabei ausschließlich über die zur Verfügung stehenden breitbandigen Datenkanäle übertragen. Nach der Betrachtung der Anhänge durch den Endnutzer kann dieser wahlweise weitere Daten mit Hilfe seines Mobiltelefons 50 auswählen und die entsprechende Auswahl über den Mobilfunkkanal an den persönlichen Server 10 weiterleiten. Der persönliche Server 10 stellt dann wiederum die html-Version der ausgewählten Datei dem anonymen Breitbandterminal 40 über einen breitbandigen Kanal zur Ansicht zur Verfügung.

Die Beendigung einer solchen Sitzung erfolgt über das Mobiltelefon 50. Wird die Verbindung über den Mobilfunkkanal durch den Endnutzer abgebrochen, so wird der Steuerserver 30 informiert und deaktiviert die Sitzung. Auch der persönliche Server 10 erhält eine entsprechende Meldung, woraufhin keine weiteren Dateien zur Ansicht freigegeben werden. Die https-Verbindung zwischen Router 20 und persönlichem Server 10 wird abgebaut, so daß durch den Router 20 keine weiteren Anfragen vom anonymen Breitbandterminal 40 an den persönlichen Server 10 weitergeleitet werden. Die Sitzungsdaten werden vom Steuerserver 30 in eine Log-Datei geschrieben und gespeichert.

Es sollte klar sein, daß sowohl das vorbeschriebene Ausführungsbeispiel als auch das Anwendungsbeispiel nicht einschränkend sind. Vielmehr lassen sich weitere Anwendungsfälle realisieren:

Beispielsweise können auch Streaming-Server durch den Endnutzer über ein mobiles Endgerät 50 angewählt werden, wodurch ein sogenanntes Video-ondemand-Verfahren realisiert werden kann. Video- oder Music-Streams können entsprechend mit Hilfe des erfindungsgemäßen Verfahrens anonym zur Verfügung gestellt werden. Die Log-In-Funktionen des Steuerservers 30 erlauben dabei eine einfache Abrechnung der Sitzung.

Ferner lassen sich sichere Internetzugänge bei unternehmenskritischen Anwendungen mit Web-Interfaces mit Hilfe des erfindungsgemäßen Verfahrens realisieren. Eine erhöhte Sicherheit für die IT-Organisation ist dadurch gegeben, daß eine Authentifizierung durch das mobile Endgerät erfolgt. Die Freischaltung des Internetzugangs erfolgt ebenfalls über das mobile Endgerät und ist nur temporär, d. h. auf die Dauer der Sitzung beschränkt. Dies erhöht ebenfalls die Zugangssicherheit.

Ferner ist die Einbindung von DVB-T bzw. DVB-H zur Ansteuerung von Fernsehgeräten über ein mobiles Endgerät und zur Darstellung von persönlichen Daten denkbar.

## Patentansprüche

1. Verfahren zur Datenübertragung von einem anbieterseitigen Server (10) an ein anonymes Breitbandterminal (40) über zumindest einen Breitbandkanal,
- wobei Steuerbefehle für die Breitbanddatenübertragung über zumindest einen Kanal eines Mobilfunknetzes (60) ausführbar sind;
- wobei für die Ausführung der Steuerbefehle zumindest ein Mobilfunkendgerät (50) verwendet wird;
- wobei für die Steuerbefehle zwischen dem Mobilfunkendgerät (50) und dem anbieterseitigen Server (10) ein abgesichertes Protokoll eingesetzt wird;
**dadurch gekennzeichnet,**
**dass** eine Authentifizierung der Datenübertragung über eine manuelle Bestätigung einer Übereinstimmung eines an das Breitbandterminal und an das Mobilfunkendgerät übertragenen Tokens vorgenommen wird.

2. Verfahren nach Anspruch 1, bei dem eine Grundregistrierung eines Endnutzers erfolgt, mit der der Endnutzer eindeutig identifizierbar ist.

3. Verfahren nach Anspruch 2, bei dem vor der Anzeige und Nutzung von vertraulichen und persönlichen oder geschützten Anwendungen oder Inhalten über anonyme Breitbandkanäle eine Identifizierung des Endnutzers über den zumindest einen Kanal eines Mobilfunknetzes (60) erfolgt.

4. Verfahren nach Anspruch 2 oder 3, bei dem die mittels der Breitbanddatenübertragung zu übertragenden Daten seitens des Endnutzers über den zumindest einen Kanal eines Mobilfunknetzes (60) auswählbar sind.

5. Verfahren nach einem der Ansprüche 2 bis 4, bei dem mittels der Breitbanddatenübertragung Daten an mehrere Breitbandterminals (40) übertragbar sind.

6. Verfahren nach Anspruch 5, bei dem die Breitbandterminals (40) seitens des Endnutzers über den zumindest einen Kanal eines Mobilfunknetzes (60) auswählbar sind.

## Claims

1. Method of transferring data from a provider-based server (10) to an anonymous broadband terminal (40) via at least one broadband channel,
- wherein control commands for the broadband data transfer can be executed via at least one channel of a mobile communications network (60),
- wherein at least one mobile communications terminal (50) is used for the execution of the control commands;
- wherein a secured protocol is used for the control commands between the mobile communications terminal (50) and the provider-based server (10);
**characterised in that** authentication of the data transfer is carried out via a manual confirmation of a match with a token transferred to the broadband terminal and to the mobile communications terminal.

2. Method as claimed in Claim 1, wherein a basic registration of an end user takes place by which the end user is unambiguously identifiable.

3. Method as claimed in Claim 2, wherein before the display and use of confidential or protected applications or contents via anonymous broadband channels an identification of the end user takes place via the at least one channel of a mobile communications network (60).

4. Method as claimed in Claim 2 or 3, wherein the data to be transferred by means of the broadband data transfer can be selected by the end user via the at least one channel of a mobile communications network (60).

5. Method as claimed in any one of Claims 2 to 4, wherein data can be transferred to a plurality of broadband terminals (40) by the user by means of the broadband data transfer.

6. Method as claimed in Claim 5, wherein the broadband terminals (40) can be selected by the end user via the at least one channel of a mobile communications network (60).

## Revendications

1. Procédé pour la transmission de données d'un serveur de prestataire (10) à un terminal à large bande anonyme (40) par au moins un canal à large bande, dans lequel
- des instructions de commande pour la transmission à large bande peuvent être exécutées sur au moins un canal d'un réseau de radiotéléphonie mobile (60),
- dans lequel au moins un terminal de radiotéléphonie mobile (50) est utilisé pour exécuter les instructions de commande,
- dans lequel un protocole sécurisé est utilisé pour les instructions de commande entre le terminal de radiotéléphonie mobile (50) et le serveur du prestataire (10),
**caractérisé en ce qu'**une authentification de la transmission de données est réalisée par la confirmation manuelle de la concordance d'un jeton transmis au terminal à large bande et au terminal de radiotéléphonie mobile.

2. Procédé selon la revendication 1, dans lequel est réalisé un enregistrement de base d'un utilisateur final qui identifie clairement l'utilisateur final.

3. Procédé selon la revendication 2, dans lequel, avant l'affichage et l'utilisation d'applications ou de contenus confidentiels et personnels ou protégés sur des canaux à large bande anonymes, l'utilisateur final est identifié sur l'au moins un canal d'un réseau de radiotéléphonie mobile (60).

4. Procédé selon la revendication 2 ou 3, dans lequel les données à transmettre par transmission de données à large bande peuvent être sélectionnées au niveau de l'utilisateur final sur l'au moins un canal d'un réseau de radiotéléphonie mobile (60).

5. Procédé selon l'une des revendications 2 à 4, dans lequel des données peuvent être transmises à plusieurs terminaux à large bande (40).

6. Procédé selon la revendication 5, dans lequel les terminaux à large bande (40) peuvent être sélectionnés au niveau de l'utilisateur final sur l'au moins un canal d'un réseau de radiotéléphonie mobile (60).
